# EUROPÄISCHE PATENTSCHRIFT

(11) **EP 3 078 798 B1**
(45) Veröffentlichungstag und Bekanntmachung des Hinweises auf die Patenterteilung: **29.11.2017**
(21) Anmeldenummer: 16164183.2
(22) Anmeldetag: 07.04.2016
(51) Int. Cl.: E06B 3/30

(54) **PROFILELEMENT**
PROFILE ELEMENT
ÉLÉMENT DE PROFILÉ

(30) Priorität: 07.04.2015 AT 502722015
(43) Veröffentlichungstag der Anmeldung: 12.10.2016
(73) Patentinhaber: IFN-Holding AG, 4050 Traun (AT)
(72) Erfinder: SEIMAYR, Kurt, 4491 Niederneukirchen (AT)
(74) Vertreter: Burger, Hannes

(56) Entgegenhaltungen:
- EP-A2- 1 279 790
- DE-A1- 3 320 631
- DE-A1- 3 844 195
- DE-A1-102013 109 733
- DE-U1- 9 411 703
- FR-A1- 2 593 547

## Beschreibung

Die Erfindung betrifft ein Profilelement für ein Fenster oder eine Tür entsprechend dem Oberbegriff des Anspruches 1, wie es aus der EP 1 279 790 A2 bekannt ist.
Neben Kunststoffen werden für Flügel- und Blendrahmen von Fenstern und Türen vor allem verschiedene Hölzer verwendet, um den Fenstern und Türen ein wertiges Aussehen zu verleihen. Die Profileelemente hierfür, auch Kantel genannt, werden üblicherweise aus Vollholz hergestellt, wobei diese auch aus mehreren miteinander verbundenen Leisten gefertigt sein können.
Zur Reduktion der Materialkosten ist aus dem Stand der Technik aber auch bekannt die Kantel aus einem Kernelement herzustellen, das wetterseitig und raumseitig von Abdeckelementen abgeschlossen ist. Das Kernelement ist dabei aus einem Furnierschichtholz hergestellt. Ein derartiges Kantel ist beispielsweise aus der DE 10 2013 109 733 A1 bekannt. Diese Druckschrift beschreibt ein Bauelement eines Fensters oder einer Tür für ein Niedrigenergiehaus oder ein Passivhaus, wobei das Bauelement ein Furnierschichtholz aufweist, das aus einer Vielzahl von miteinander verleimten Einzellagen mit einer Dicke in einem Bereich von jeweils 1,0 mm bis 4,0 mm besteht. Zumindest eine im Einbauzustand sichtbare Oberfläche des Bauelementes ist oberflächlich mit einem Abschlussfurnier aus Holz, einem Laminat, einer Metallplatte wie Aluminium oder einer anderen Oberflächenbeschichtung oder Lackierung versehen.
Auch aus der DE 296 10 829 U1 und der DE 100 30 721 A1 sind Kantel bekannt, die teilweise aus einer Vielzahl von Furnierlagen bestehen.
Der vorliegenden Erfindung liegt die Aufgabe zu Grunde ein relativ kostengünstig herstellbares Profilelement für ein Fenster oder eine Tür in einer breiten Palette an unterschiedlichsten Ausführungen zur Verfügung zu stellen.

Die Aufgabe der Erfindung wird bei dem eingangs genannten Profilelement dadurch gelöst, dass die Feder der zumindest einen Nut-Feder-Verbindung einen Querschnitt aufweist, der komplementär zum Querschnitt der Nut ist, sodass die Feder die Nut zur Gänze ausfüllt, und dass im Bereich neben der Nut-Feder-Verbindung eine schlitzförmige Ausnehmung neben der Nut ausgebildet ist, wobei die Nut-Feder-Verbindung einen Steg zwischen der schlitzförmigen Ausnehmung und der Nut aufweist.

Von Vorteil ist dabei, dass das Abdeckelement nicht nur einfach mit dem Kernelement verbindbar ist, sondern dass damit das Abdeckelement auch jederzeit ausgetauscht werden kann. Es kann damit das raumseitige Aussehen des Fensters oder der Tür einfach und jederzeit an die Innenausstattung des Raumes angepasst werden. Darüber hinaus bietet dieses System den Vorteil, dass das tragende Kernelement vollständig fertig bearbeitet werden kann, bevor das Abdeckelement an diesem befestigt wird. Somit kann also das Abdeckelement in einem relativ späten Stadium der Herstellung des Fensters oder der Tür an dem Kernelement befestigt werden. Das Abdeckelement, das normalerweise aus einem teureren Holz als das Kernelement besteht, kann somit besser und einfacher vor Beschädigungen während der Herstellung des Fensters oder der Tür geschützt werden, sodass also hierfür auf besondere Maßnahmen verzichtet werden kann. Insbesondere ist es auch möglich, dass das Abdeckelement erst am Kernelement befestigt wird, wenn sämtlich Arbeiten am Bau, wie beispielsweise die Anbringung des Innenputzes oder das Ausmalen der Wände oder die Einbringung des Estrichs, bereits abgeschlossen sind. Nachdem das Abdeckelement keine tragende Funktion hat, diese wird bevorzugt ausschließlich vom Kernelement übernommen, ist es weiter möglich, für das Abdeckelement Holzarten zu verwenden, die bislang aus statischen Gründen oder mangels Witterungsbeständigkeit in der Herstellung von Fenstern oder Türen nicht einsetzbar waren. Damit erhöht sich die Möglichkeit der Oberflächengestaltung eines Fensters oder einer Tür, wobei die Oberfläche des Abdeckelementes an den Kundenwunsch angepasst werden kann, beispielsweise auch sägerauh, gebürstet, gekalkt, etc., ausgeführt werden kann. Durch den modulartigen Aufbau des Profilelementes ist zudem ein höherer Automatisierungsgrad in der Herstellung von Fenstern und Türen möglich, da das Kernelement unabhängig von der Ansichtsgestaltung des Fensters oder der Tür weitgehend standardisiert werden kann, also eine Kernelement für mehrere Ausführungsvarianten unterschiedlichster Fenstertypen oder Türentypen verwendet werden kann.

Dadurch, dass die Feder der zumindest einen Nut-Feder-Verbindung einen Querschnitt aufweist, der komplementär zum Querschnitt der Nut ist, sodass die Feder die Nut zur Gänze ausfüllt, kann die Festigkeit der Verbindung zwischen Kernelement und Abdeckelement verbessert werden, sodass die Verbindung Witterungseinflüssen, insbesondere Temperaturschwankungen, besser standhält und nicht lose wird.

Durch die schlitzförmige Ausnehmung neben der Nut wird ein Bereich geschaffen, in den der Steg zwischen dieser Nut und der Nut der Nut-Feder-Verbindung während des Eindrückens der Feder in die Nut ausweichen kann, wodurch die Befestigung des Abdeckelementes am Kernelement mit geringerem Kraftaufwand und damit mit einer verringerten Gefahr der Beschädigung der Feder während der Befestigung des Abdeckelementes erfolgen kann. Zudem kann damit aber auch die Demontage des Abdeckelementes vom Kernelement vereinfacht werden. Die Festigkeit der Nut-Feder-Verbindung leidet durch diese zusätzliche Nut aber nicht, da der ausweichende Steg nach dem Einführen der Feder in die Nut der Nut-Feder-Verbindung wieder zurückfedert.

Gemäß einer bevorzugten Ausführungsvariante des Profilelementes kann vorgesehen sein, dass das Abdeckelement werkzeuglos lösbar mit dem Kernelement verbunden ist, d.h. mit anderen Worten ausgedrückt, dass das Abdeckelement ausschließlich über die zumindest eine Nut-Feder-Verbindung mit dem Kernelement verbunden ist. Das Abdeckelement ist damit einfacher abnehmbar, sodass dieses auch von einem Laien ausgetauscht bzw. abgenommen werden kann.

Es kann weiter vorgesehen werden, dass zur Verbindung des Abdeckelementes mit dem Kernelement sowohl im Abdeckelement als auch im Kernelement jeweils zumindest eine Nut ausgebildet ist, in die eine Feder des jeweils anderen Elementes eingreift. Es wird damit ein besserer Zusammenhalt von Abdeckelement und Kernelement erreicht. Zudem kann das Abdeckelement einfacher mit einer Schwenkbewegung montiert werden, sodass die ortsgenaue Befestigung des Abdeckelementes am Kernelement ohne Verrutschen während der Befestigung einfacher erfolgen kann.

Das Kernelement ist vorzugsweise mehrschichtig aus miteinander verbundenen Einzelschichten ausgebildet, wodurch die Statik des Profilelementes auch bei Einsatz von günstigeren und damit weniger festen Holzarten verbessert werden kann. Das Profilelement kann damit insgesamt günstiger hergestellt werden.

Zur Erhöhung der Tragfähigkeit des Kernelementes kann vorgesehen sein, dass am und/oder im Kernelement ein aus Fasern hergestelltes Verstärkungselement angeordnet ist. Der Einsatz eines derartigen Verstärkungselements hat im Vergleich zu herkömmlichen Verstärkungselementen aus Metallprofilen, die üblicherweise in so genannten Kunststofffenstern eingesetzt werden, den Vorteil, dass sich das Verstärkungselement einfach an eine vorhandene Kontur des Kernelementes anpassen lässt.

Gemäß einer Ausführungsvariante dazu kann vorgesehen werden, dass das Verstärkungselement eine Schicht des Kernelementes bildet. Es ist damit möglich, dass das Verstärkungselement bereits bei der Herstellung des Kernelementes mit eingebaut wird. Darüber hinaus hat diese Anordnung den Vorteil, dass keine zusätzliche Bearbeitung des Kernelementes, z.B. eine Befräsung, für die Anordnung des Verstärkungselements an oder in dem Kernelement erforderlich ist.

Beschläge des Fensters oder der Tür sind vorzugsweise ausschließlich im und/oder auf dem Kernelement, insbesondere im Falzbereich, angeordnet, wodurch die Geometrie des Abdeckelementes vereinfacht werden kann und zudem die Austauschbarkeit des Abdeckelementes verbessert werden kann. Zudem kann die Funktionalität des Fensters oder der Tür zur Gänze fertig gestellt werden, auch wenn noch kein Abdeckelement am Kernelement angeordnet ist. Es wird damit erreicht, dass die Funktionalität des Fensters oder der Tür in der Rohbauphase bereits vollständig zur Verfügung steht und keine Einschränkungen hingenommen werden müssen.

Es ist weiter möglich, dass am Kernelement ein Wärmedämmelement angeordnet ist, dessen Oberfläche zumindest teilweise foliert ist. Es ist damit nicht mehr notwendig, dass das Wärmedämmelement im Inneren eines Fenster- oder Türprofils verbaut werden muss, da die Folie an die Optik der verwendeten Profilelemente einfach angepasst werden kann. Der konstruktive Aufbau des Gesamtsystems Fenster oder Tür kann damit vereinfacht werden. Zudem kann damit die Wasserführung innerhalb des Fensters oder der Tür verbessert werden, da auf die Ausbildung von Hohlräumen in der Wärmedämmung zur Anordnung von Dichtelementen verzichtet werden kann, da sämtliches Wasser über die Oberfläche des Wärmedämmelementes abgeleitet werden kann.

Zum besseren Verständnis der Erfindung wird diese anhand der nachfolgenden Figuren näher erläutert.

Es zeigen jeweils in vereinfachter, schematischer Darstellung:
- Fig. 1: einen Ausschnitt aus einem Fenster im Querschnitt;
- Fig. 2: einen Ausschnitt aus einem Fenster im Querschnitt im Bereich der Nut-Feder-Verbindung zwischen Kernelement und Abdeckelement;
- Fig. 3: einen Ausschnitt aus einem Fenster im Querschnitt im Bereich der Nut-Feder-Verbindung zwischen Kernelement und Abdeckelement;
- Fig. 4: einen Ausschnitt aus einem Fenster im Querschnitt im Bereich der Nut-Feder-Verbindung zwischen Kernelement und Abdeckelement.

Einführend sei festgehalten, dass in den unterschiedlich beschriebenen Ausführungsformen gleiche Teile mit gleichen Bezugszeichen bzw. gleichen Bauteilbezeichnungen versehen werden, wobei die in der gesamten Beschreibung enthaltenen Offenbarungen sinngemäß auf gleiche Teile mit gleichen Bezugszeichen bzw. gleichen Bauteilbezeichnungen übertragen werden können. Auch sind die in der Beschreibung gewählten Lageangaben, wie z.B. oben, unten, seitlich usw. auf die unmittelbar beschriebene sowie dargestellte Figur bezogen und sind diese Lageangaben bei einer Lageänderung sinngemäß auf die neue Lage zu übertragen.

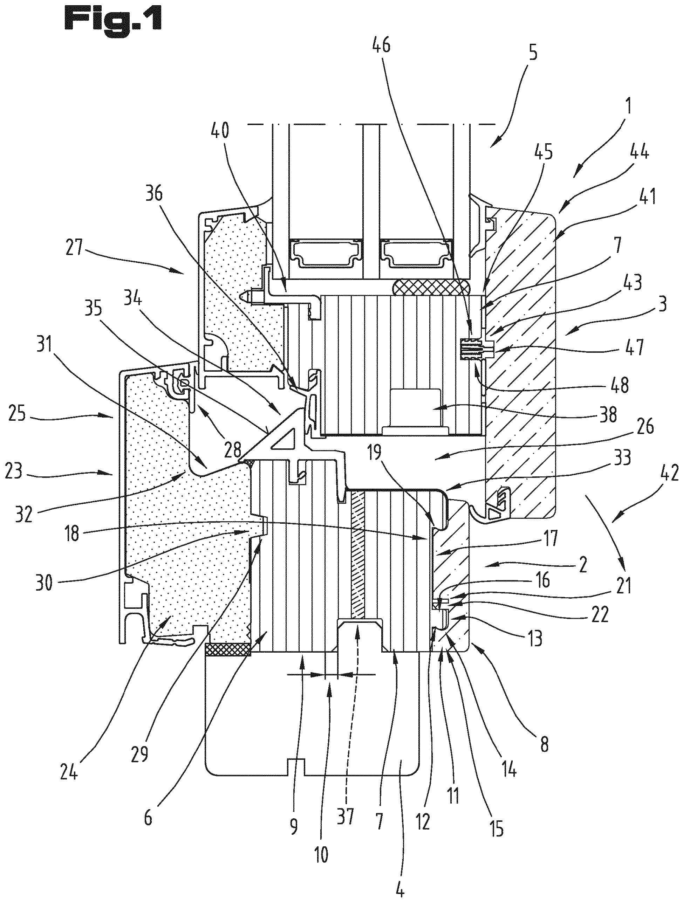

Fig. 1 zeigt einen Ausschnitt aus einem Fenster 1 im Querschnitt.

Es sei darauf hingewiesen, dass die folgenden Ausführungen auch für Türen gelten, wie insbesondere Balkontüren oder Terrassentüren, auch wenn im Folgenden nicht mehr ausdrücklich darauf Bezug genommen wird.

Das Fenster 1 umfasst einen Blendrahmen 2, einen Flügelrahmen 3 und vorzugsweise einen Blindrahmen 4. Im Flügelrahmen 3 ist ein Glaselement 5 angeordnet.

Prinzipiell sind diese Bestandteile von Fenstern und deren Funktion bekannt, sodass dazu auf den einschlägigen Stand der Technik verwiesen sei.

Es ist weiter möglich, auf den Blendrahmen 2 zu verzichten, wenn das Fenster 1 als Fixverglasung mit nicht öffenbarem Fensterflügel ausgeführt ist.

Der Blendrahmen 2 ist aus miteinander verbundenen Profilelementen 6 gebildet bzw. besteht aus diesen Profilelementen 6. Die Verbindung der einzelnen Profilelemente 6 in den Eckbereichen des Fensters 1 erfolgt bevorzugt durch Verklebung der auf Gehrung geschnittenen Profilelemente 1. Es ist aber auch möglich, wenngleich nicht bevorzugt, eine an sich bekannte Zapfung vorzunehmen. Weiter ist es möglich, dass die Profilelemente 6 in den Eckbereichen stumpf aneinander anliegend miteinander verbunden sind.

Das Profilelement 6 des Blendrahmens 2 besteht bzw. die Profilelemente 6 bestehen jeweils aus einem Kernelement 7 und zumindest einem Abdeckelement 8 bzw. umfassen diese Bestandteile. Das in Fig. 1 dargestellte Abdeckelement 8 ist im eingebauten Zustand des Fensters 1 raumseitig am Kernelement 7 angeordnet.

Gemäß einer besonderen Ausführungsvariante des Profilelementes 6 kann vorgesehen sein, dass der aus diesen Profilelementen 6 gebildete Rahmen in den Ecken auf Gehrung (45 °) geschnittene und miteinander verbundene Kernelemente 7 aufweist, und dass die Abdeckelemente 8 in den Ecken stumpf aneinanderstoßend auf den Kernelementen angeordnet werden. Es wird damit nicht nur das optische Aussehen des Fensters 1 verändert und einfach an die jeweiligen Kundenwünsche anpassbar, sondern kann damit auch erreicht werden, dass der Gehrungsbereich der Kernelemente 7, die ja die tragende Funktion übernehmen, durch die Abdeckelemente 8 abgedeckt und damit besser geschützt werden kann, beispielsweise vor eindringender Feuchtigkeit.

Das Kernelement 7 ist bevorzugt mehrschichtig aus miteinander verbundenen Einzelschichten 9 ausgebildet. Die Einzelschichten 9 sind dabei insbesondere miteinander verklebt. Weiter bestehen die Einzelschichten 9 aus einem Holzwerkstoff, wie insbesondere aus einem Holzfurnier (Schälfurnier), einem Sperrholz, etc.. Es können verschiedenste Hölzer verwendet werden, beispielsweise Fichtenholz, Tannenholz, Birkenholz, etc.. Eine Schichtdicke 10 der Einzelschichten 9 kann ausgewählt sein aus einem Bereich von 2 mm bis 6 mm, insbesondere aus einem Bereich von 3 mm bis 4 mm.

Die Anzahl der Einzelschichten 9, aus denen das Kernelement 7 gebildet ist, richtet sich einerseits nach deren Schichtdicke 10 und andererseits nach der Gesamtbreite des Kernelementes 7 in Richtung der Schichtdicke 10 der Einzelschichten 9. Insbesondere kann die Anzahl der Einzelschichten 9 pro Kernelement 7 ausgewählt sein aus einem Bereich von 10 bis 50.

Mit dieser Ausbildung des Kernelementes 7 kann ein Profilelement 6 hergestellt werden, das eine hohe Festigkeit, eine sehr geringe Verformungsanfälligkeit, ein hohes E-Modul, etc. aufweist.

Die Einzelschichten 9 können alle die gleiche Schichtdicke 10 aufweisen. Es ist aber auch möglich, dass zumindest einzelne der Einzelschichten 9 eine höhere Schichtdicke aufweisen, als die restlichen Einzelschichten. Beispielsweis können die äußeren bzw. äußersten Einzelschichten im Vergleich zu den Kernschichten eine höhere Schichtdicke 10 aufweisen.

Obwohl die Ausbildung des Kernelementes 7 aus mehreren Einzelschichten 9 aus einem Holzwerkstoff die bevorzugte ist, kann das Kernelement aber auch anders ausgebildet sein, beispielsweise aus Kunststoff oder aus Vollholz in Art eines herkömmlichen Kantels für Fenster 1 oder Türen.

Das Abdeckelement 8 besteht zumindest teilweise, insbesondere zu Gänze, aus einem Vollholzelement, ist also einschichtig ausgebildet. Als Holz kann beispielsweise Fichte, Lärche, Eiche, Nuss, Oregon, etc., verwendet werden. Nachdem das Abdeckelement 8 keine tragende Funktion erfüllt, können sämtliche Holzarten verwendet werden, wie dies bereits voranstehend ausgeführt wurde. Auch hinsichtlich der Gestaltung der sichtbaren Oberfläche bestehen keinerlei Einschränkungen.

Ebenso kann der Querschnitt bzw. die Geometrie des Abdeckelementes 8 unterschiedlich ausgebildet sein. Beispielsweise kann das Abdeckelement flächenbündig mit den Flügelrahmenprofilen verlaufend ausgebildet sein, sodass also die sichtbare Oberfläche des Abdeckelementes 8 mit der sichtbaren Oberfläche der Flügelrahmenprofile fluchtend angeordnet ist.

Es ist aber auch möglich, dass das Abdeckelement 8 aus einem anderen Werkstoff besteht oder diesen umfasst. Beispielsweise kann das Abdeckelement 8 aus einem Metall, z.B. Aluminium, oder aus Kunststoff bestehen. Es können damit auch gänzlich neue optische Gestaltungsmöglichkeiten für Fenster 1 oder Türen geschaffen werden. Z.B. kann das Abdeckelement 8 eine Lederoptik aufweisen.

Zur Verbindung des Abdeckelementes 8 mit dem Kernelement 7 ist zwischen diesen beiden Elementen eine Nut-Feder-Verbindung 11 vorgesehen. Damit ist das Abdeckelement 8 lösbar mit dem Kernelement 7 verbunden, sodass das Abdeckelement 8 jederzeit montiert bzw. demontiert und ausgetauscht werden kann. Vorzugsweise ist das Abdeckelement 8 ausschließlich über diese zumindest eine Nut-Feder-Verbindung 11 mit dem Kernelement 7 verbunden, sodass Montage oder Demontage des Abdeckelementes werkzeuglos erfolgen kann.

Die Nut-Feder-Verbindung 11 weist eine Feder 12 und eine Nut 13 auf bzw. besteht aus diesen Elementen. Die Nut 13 weist in Richtung auf den Nutengrund eine (einseitige) Querschnittserweiterung 14 auf, die in einer der beiden Seitenwände ausgebildet ist. Es besteht aber auch die Möglichkeit, dass in beiden Seitenwänden der Nut 13 eine derartige Querschnittserweiterung 14 ausgebildet ist. Durch die Querschnittserweiterung wird eine Hinterschneidung 15 in der Nut 13 ausgebildet.

Die Feder 12 weist an einer Seitenwand oder an beiden Seitenwänden eine Querschnittserweiterung 16 auf. Falls nur eine (einseitige) Querschnittserweiterung 16 an der Feder 12 ausgebildet ist, ist diese auf der Seitenwand angeordnet, die zur zumindest teilweisen Anlage an die Seitenwand der Nut 13 gelangt, in der die Hinterschneidung 15 ausgebildet ist. Die Feder 12 weist also im Querschnitt betrachtet einen zumindest annähernd L-förmigen Querschnitt auf.

Durch das Eingreifen der Querschnittserweiterung 16 der Feder 12 in die Querschnittserweiterung 14 der Nut 13 wird die Feder 12 in der Nut 13 verriegelt, sodass die feste, aber lösbare Verbindung des Abdeckelementes 8 mit dem Kernelement 7 hergestellt wird. Insbesondere wird die Oberfläche der Querschnittserweiterung 16 der Feder 12 gegen die Oberfläche der Querschnittserweiterung 14 der Nut 13 gepresst, sodass also diese Oberflächen Pressflächen ausbilden.

In der in Fig. 1 dargestellten Ausführungsvariante des Profilelementes 6 ist die Nut 13 im Abdeckelement 8 und die Feder 12 an dem Kernelement 7 ausgebildet. Es besteht aber auch die umgekehrte Möglichkeit der Anordnung, dass also die Feder 12 an dem Abdeckelement 8 und die Nut 13 in dem Kernelement 7 ausgebildet sind.

Gemäß einer bevorzugten Ausführungsvariante des Profilelementes 6 weisen sowohl das Kernelement 7 als auch das Abdeckelement 8 eine Nut und eine Feder auf. Dabei kann die Nut 13 im Abdeckelement 8 und die Feder 12 am Kernelement 7 ausgebildet sein. Beabstandet zu diesen können - wie dies aus Fig. 1 ersichtlich ist - das Abdeckelement 8 eine weitere Feder 17 und das Kernelement 7 eine weitere Nut 18 aufweisen. Die weitere Nut 18 und die weitere Feder 17 können ebenfalls bevorzugt mit einer (einseitigen) Querschnittserweiterung ausgebildet sein, sodass also auch diese weitere Nut 18 in zumindest einer der Seitenwände eine Hinterschneidung 19 aufweist. Die Geometrie der weiteren Nut 18 und/oder der weiteren Feder 17 kann unterschiedlich sein zu jener der Nut 13 und/oder der Feder 12. Insbesondere können die weitere Feder 17 und die weitere Nut 18 breiter sein und/oder eine andere Form der Querschnittserweiterung aufweisen, wie dies aus Fig. 1 ersichtlich ist. Dabei kann sich bevorzugt die Querschnittserweiterung der weiteren Nut 18 bis zu deren Nutengrund erstrecken, wohingegen sich die Querschnittserweiterung 14 der Nut 13 vor dem Nutengrund wieder reduziert, sodass also diese die Breite der Nut 13 im an den Nutengrund anschließenden Bereich zumindest annähernd gleich groß ist wie die Breite der Nut 13 im Bereich anschließend an die Einführöffnung für die Feder 12. Die dadurch gebildete Ausnehmung in der Seitenwand kann - wie dies aus Fig. 1 ersichtlich ist - gerundet ausgeführt sein. Der Rundungsradius der Rundung über den Verlauf der Ausnehmung in Richtung auf den Nutengrund kann variieren.

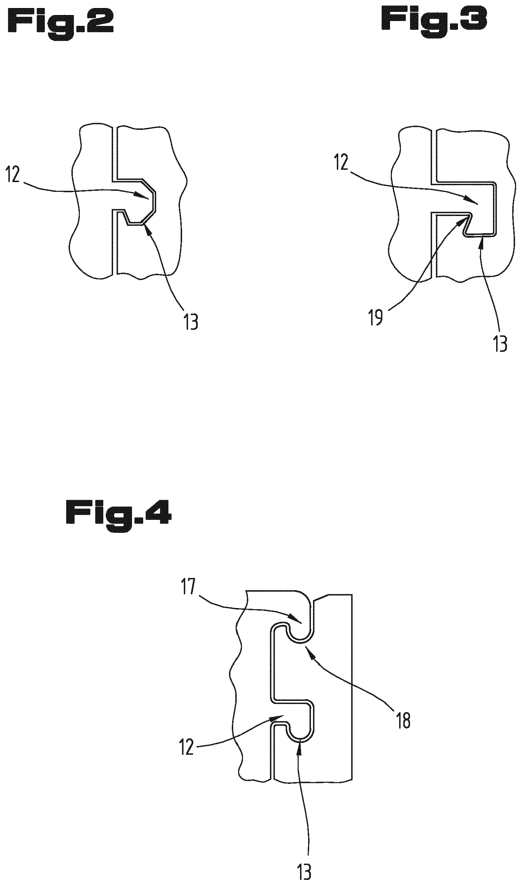

Die Querschnittserweiterung 16 der Feder 12 weist einen dazu komplementären Querschnittsverlauf auf, sodass die Feder 12 also einen gerundeten Vorsprung aufweisen kann. Durch die Ausbildung der Rundungen der Ausnehmung in der Nut 13 und des Vorsprunges der Feder 12 kann letztere einfacher in die Nut eingeführt und in dieser verriegelt werden.
Zum Unterschied dazu kann die Querschnittserweiterung der weiteren Nut 18 im Kernelement 7 derart ausgebildet sein, dass die entsprechende Seitenwand der weiteren Nut 18 mit dem Nutengrund einen spitzen Winkel einschließt, also beispielsweise einen halben Schwalbenschanz ausbildet, wie dies ebenfalls aus Fig. 1 ersichtlich ist. Weiter kann die Seitenwand der weiteren Nut 18, in der die Querschnittserweiterung ausgebildet ist, im Bereich der Einführöffnung für die weitere Feder 17 mit einer Rundung versehen sein.
Die Querschnittserweiterung der weiteren Feder 17 kann einen zum Querschnittsverlauf der weiteren Nut 18 zumindest annähernd komplementären Verlauf aufweisen, wie dies aus Fig. 1 ersichtlich ist.
Sofern zwei Nuten 13, 18 und zwei Federn 12, 17 zur Ausbildung der Nut-Feder-Verbindung 11 zwischen dem Abdeckelement 8 und dem Kernelement 7 angeordnet sind, weisen die Querschnittserweiterungen 14, 16 der Nut 13 und der Feder 12 bevorzugt in die entgegengesetzte Richtung wie die Querschnittserweiterungen der weiteren Nut 18 und der weiteren Nut 17.
Neben der in Fig. 1 gezeigten bevorzugten Ausführung der Nut-Feder-Verbindung 11 mit der Feder 12, der Nut 13, der weiteren Feder 17 und der weiteren Nut 18, können die Feder 12 und/oder die Nut 13 und/oder die weitere Feder 17 und/oder die weitere Nut 18 auch eine andere Querschnittsform aufweisen, solange diese Querschnitte die gleiche Funktion erfüllen. Beispiele dafür sind in den Fig. 2 bis 4 dargestellt (die erfindungsgemäße schlitzförmige Ausnehmung und der Steg sind nicht gezeigt). Beispielsweise können die Nut 13 und die Feder 12 einen polygonalen, d.h. nicht runden, Querschnittsverlauf aufweisen, wie dies in Fig. 2 dargestellt ist. Obwohl in Fig. 2 nur ein sechseckiger Querschnittsverlauf dargestellt ist, können die Nut 13 und die Feder 12 auch weniger oder mehr als sechs Ecken aufweisen.

Es ist auch möglich, dass die Feder 12 eine Hinterschneidung 19 aufweist, wie dies in Fig. 3 dargestellt ist. Die Nut 13 kann einen dazu komplementären Verlauf aufweisen.

Ebenso ist es möglich, dass sowohl die Feder 12 als auch die weitere Feder 17 hakenförmig mit einem zumindest annähernd L-förmigen Querschnitt ausgebildet sind, wie dies aus Fig. 4 ersichtlich ist. Wiederum können die Nut 13 und die weitere Nut 18 einen dazu komplementären Querschnittsverlauf aufweisen.

Obwohl in Fig. 1 zwei Nuten 13, 18 und zwei Federn 12, 17 der Nut-Feder-Verbindung 11 dargestellt sind, kann auch nur eine Nut 13 und eine Feder 12 bzw. können mehr als zwei, beispielsweise drei oder vier, Nuten 13,1 8 und Federn 12, 17 zur Herstellung der Nut-Feder-Verbindung 11 zwischen dem Kernelement 7 und dem Abdeckelement 8 vorgesehen werden.

Trotz der festen, verriegelten Verbindung zwischen dem Abdeckelement 8 und dem Kernelement 7 bleibt das Abdeckelement 8 nach dessen Verriegelung mit dem Kernelement 7 entlang der Längsachse des Profilelementes 6 verschiebbar (auch wenn dazu ein höherer Kraftaufwand erforderlich ist), sodass also das Abdeckelement 8 nach dessen Anordnung auf dem Kernelement 7 noch justiert werden kann.

Die Feder 12 und gegebenenfalls die weitere Feder 17 der zumindest einen Nut-Feder-Verbindung 11 weist/weisen einen Querschnitt auf, der komplementär zum Querschnitt der Nut 13 und/oder der weiteren Nut 18 ist/sind, sodass die Feder 12 und/oder die weitere Feder 17 die Nut 13 und/oder die weitere Nut 18 vollständig ausfüllt.

Dabei ist es von Vorteil, dass im Bereich neben der Nut-Feder-Verbindung 11 eine schlitzförmige Ausnehmung 21 neben der Nut 13 ausgebildet ist. Diese schlitzförmige Ausnehmung 21 erstreckt sich dabei beginnend von der Oberfläche des Abdeckelementes 8, die zur Anlage an das Kernelement 7 gelangt, in Richtung auf die dieser Oberfläche gegenüberliegende, raumseitige Oberfläche des Abdeckelementes 8 und endet vor dieser Oberfläche.

Falls die Nut 13 im Kernelement 7 ausgebildet ist, ist die schlitzförmige Ausnehmung 21 im Kernelement 7 entsprechend ausgebildet.

In der Ausführungsvariante des Profilelementes 6 nach Fig. 1 ist die schlitzförmige Ausnehmung 21 in der weiteren Feder 17 des Abdeckelementes 8 ausgebildet. Sie ist benachbart zur Nut 13 angeordnet. Der Abstand zur Nut 13 kann dabei zwischen 2 mm und 10 mm, insbesondere zwischen 2 mm und 5 mm, betragen.

Durch die Ausbildung der schlitzförmigen Ausnehmung 21 wird ein Steg ausgebildet, der anschließend an die Nut 13 situiert ist und der eine Seitenwand der Nut 13 bildet. Dieser Steg 22 kann bei Einführung der Feder 12 in Richtung auf die schlitzförmige Ausnehmung 21 ausweichen, sodass die Einführung der Feder 12 in die Nut 13 und auch deren Entfernung aus der Nut 13 zur Demontage des Abdeckelementes einfacher erfolgen kann.

Die schlitzförmige Ausnehmung 21 kann generell in Ausführungsvarianten des Profilelementes 6 ausgebildet werden, ist also nicht auf die Ausführungsvariante des Profilelementes 6 nach Fig. 1 beschränkt.

Das Profilelement 6 kann wetterseitig - wiederum bezogen auf die Einbaulage des Fensters 1 - ein weiteres Abdeckelement 23 aufweisen. Dieses Abdeckelement 23 umfasst ein Wärmedämmelement 24, das insbesondere aus einem Kunststoffschaum, beispielsweise einem PU-Schaum oder einem XPS-Schaum, besteht. Prinzipiell sind derartige Kunststoffschäume für den Einsatz in Fenstern 1 bekannt, sodass sich weitere Ausführungen dazu erübrigen.

Wetterseitig ist das Wärmedämmelement zum Schutz vor der Bewetterung (und auch aus optischen Gründen) von einer Schutzschale 25, insbesondere einer Aluminiumschale, abgedeckt. Die Schutzschale 25 kann als Strangpressprofil hergestellt sein.

Das weitere Abdeckelement 23 weist bevorzugt eine Höhe auf, die so groß bemessen ist, dass ein Falz 26 zwischen dem Blendrahmen 2 und dem Flügelrahmen 3 überdeckt wird, wie dies aus Fig. 1 ersichtlich ist.

Auch der Flügelrahmen 3 kann ein derartiges weiteres Abdeckelement 27 aufweisen. In diesem Fall ist am weiteren Abdeckelement 23 des Blendrahmens 2 ein Dichtelement 28 vorgesehen, das in einer Nut der Schutzschale 25 gehalten wird, und gegen das das weitere Abdeckelement 27 des Flügelrahmens 3 in der Geschlossenstellung dichtend anschlägt. Falls kein derartiges weiteres Abdeckelement 23 am Flügelrahmen 3 vorhanden ist, kann das Dichtelement 28 direkt an einem Kernelement 7 des Flügelrahmens 3 oder am Glaselement 5 in der Geschlossenstellung dichtend anliegen.

Das weitere Abdeckelement 23 des Profilelementes 6 ist insbesondere mit dessen Kernelement 7 verklebt. Es kann zusätzlich auch zumindest eine Nut 29 vorgesehen werden, in die (jeweils) ein Steg 30 des Wärmedämmelementes 24 eingreift.

Die Schutzschale 25 kann mit Wärmedämmelement 24 form- und/oder stoffschlüssig verbunden sein.

Zumindest ein in der Offenstellung des Fensters einsehbarer Bereich 31 des Wärmedämmelementes 24 ist vorzugsweise foliert ausgeführt, also mit einer Folie 32 versehen. Dies hat nicht nur den Vorteil, dass damit das Aussehen des Wärmedämmelementes 24 an die Oberflächengestaltung des restlichen Profilelementes 6 angepasst werden kann, sondern kann damit insbesondere die Wasserführung in diesem Bereich verbessert werden.

Es ist aber auch möglich, dass weitere Oberflächen des Wärmedämmelementes 24, insbesondere die gesamte Umfangsfläche des Querschnittes, foliert sind.

Als Folie kann beispielsweise eine Polyethylenfolie verwendet werden.

Es ist aber auch möglich, anstelle der Folie ein Klebeband zu verwenden.

Aus den gleichen Gründen kann auch das Kernelement 7 des Profilelementes 6 zumindest im sichtbaren Bereich des Falzes 26 mit einer Deckschicht 33 versehen sein. Diese Deckschicht kann beispielsweise ein Echtholzfurnier oder eine Folie oder eine Lackschicht sein.

Zur Ausbildung einer weiteren Dichtebene zwischen Flügelrahmen 3 und Blendrahmen 2 kann an letzterem im Bereich des Falzes 25 ein weiteres Dichtelement 34 angeordnet sein. Diese weitere Dichtelement 34 kann als Profil ausgebildet sein, dass einen Querschnitt annähernd in der Form einer 4 aufweist, sodass eine wetterseitige Fläche 35 des Dichtelementes 34 in Richtung auf das Wärmedämmelement 25 schräg nach unten geneigt ist, wodurch ebenfalls die Entwässerung des Profilelementes 6 verbessert werden kann. Dazu kann das weitere Dichtelement 34 das Wärmedämmelement 25 teilweise überdeckend angeordnet werden.

Das weitere Dichtelement 34 ist vorzugsweise über nach unten vorragende Schenkel seines Profils, die in entsprechende Nuten des Kernelementes 7 eingreifen, mit letzterem verbunden.

Der Flügelrahmen 3 schlägt in der Geschlossenstellung über ein an ihm angeordnetes zusätzliches Dichtelement 36 an dem weiteren Dichtelement 34 an.

Gemäß einer weiteren Ausführungsvariante des Profilelementes 6 kann vorgesehen sein, dass am und/oder im Kernelement zumindest ein aus Fasern hergestelltes Verstärkungselement 37 angeordnet ist. Dieses Verstärkungselement 37 kann eine der Einzelschichten 9 des Kernelementes 7 bilden, wie diese in Fig. 1 strichliert dargestellt ist. Es können auch mehr als eine der Einzelschichten 9 durch ein derartiges Verstärkungselement 37 gebildet sein, wobei selbstverständlich nicht das gesamte Kernelement 7 durch die Verstärkungselemente 37 gebildet wird. Vielmehr ist die Anzahl der Einzelschichten 9 aus dem voranstehend genanntem Holzwerkstoff, insbesondere dem Schichtfurnier, größer als die Anzahl der Einzelschichten 9 aus dem Verstärkungselement 37.

Zusätzlich oder alternativ dazu ist es auch möglich, dass das zumindest eine Verstärkungselement 37 nicht vertikal sondern horizontal - bezogen auf die Fig. 1 - in oder an dem Kernelement 7 angeordnet wird. Beispielsweise kann die Deckschicht 33 im Falz 26 aus dem Verstärkungselement 37 gebildet sein oder dieses umfassen.

Vorzugsweise werden als Fasern anorganische Fasern oder organische Fasern mit geringer Wärmeleitfähigkeit verwendet. Beispielsweise können die Fasern ausgewählt sein aus einer Gruppe umfassend oder bestehend aus Glasfasern, Gesteinsfasern, wie z.B. Basaltfasern, Carbonfasern, Keramikfasern, Naturfasern, wie z.B: Holzfasern, Hanffasern, Flachsfasern, etc., Chemiefasern, wie z.B, Cellulosefasern, PET-Fasern, PA-Fasern, PAI-Fasern, Aramidfasern, PAN-Fasern, PTFE-Fasern, etc..

Die Fasern können eine Länge aufweisen, die ausgewählt ist aus einem Bereich von 10 mm bis 80 mm, insbesondere aus einem Bereich von 20 mm bis 50 mm. Es können aber auch Endlosfasern verwendet werden.

Es sind auch Mischungen aus zwei oder mehr verschiedenen Faserarten und/oder Faserlängen einsetzbar.

Die Fasern können mit einem organischen Harz, beispielsweise einem Epoxid oder einem Polyurethanharz, gebunden sein. Der Anteil des Harzes an dem Verstärkungselement 37 kann ausgewählt sein aus einem Bereich von 20 Gew.-% bis 70 Gew.-%, insbesondere aus einem Bereich von 30 Gew.-% bis 40 Gew.-%. Den Rest auf 100 Gew.-% bilden die Fasern.

Gegebenenfalls können mehrere Einzelfasern zu einem Faserbündel zusammengefasst sein und so in dem Verstärkungselement 37 vorliegen.

Es ist weiter bevorzugt, wenn die oder sämtliche Beschläge des Fensters 1 ausschließlich im und/oder auf dem Kernelement, insbesondere im Falzbereich, angeordnet sind. Dazu ist in Fig. 1 beispielhaft eine Ausnehmung 38 im Kernelement 7 des Flügelrahmens 3 dargestellt, die der Aufnahme eines Beschlages dient.

Es sei an dieser Stelle erwähnt, dass nicht nur der Blendrahmen 2 aus den voranstehend beschriebenen Profilelement 6 mit dem Kernelement 7 und dem zumindest einen Abdeckelement 8 sondern auch der Flügelrahmen 3 aus derartigen Profilelementen 6 hergestellt sein kann. Die Ausführungen zu dem Profilelement 6 für den Blendrahmen 2 sind also auch auf die Profilelemente 6 des Flügelrahmens 3 zumindest teilweise übertragbar und auf diese anwendbar.

Ebenso kann der Blindrahmen 4 aus einem voranstehend beschriebenen Schichtholz gebildet sein. Nachdem der Blindrahmen 4 üblicherweise nicht sichtbar ist, kann auf die Anordnung von einem oder mehreren Abdeckelementen verzichtet werden.

In Fig. 1 ist weiter ein Positionierhilfsmittel 43 für die Anordnung eines Abdeckelementes 44 dargestellt. Das Abdeckelement 44 kann dabei mit dem Kernelement verklebt sein, insbesondere über Klebestreifen 45. Um das Abdeckelement 44 bereits in der richtigen Höhe bzw. in der richtigen relativen Stellung zum Kernelement 7 positionieren zu können und um dabei das vorzeitige, schiefe ankleben des Abdeckelementes 44 zu vermeiden, kann zumindest eines der Positionierhilfsmittel 43 vorgesehen sein.

Das Positionierhilfsmittel 43, das beispielsweise stiftförmig oder leistenförmig ausgebildet sein kann, ist teilweise in einer Ausnehmung 46, beispielsweise einer Bohrung oder einer Nut, des Kernelementes 7 angeordnet. Die dem Kernelement 7 zugewandte Oberfläche des Abdeckelementes 44 kann ebenfalls eine Ausnehmung 47, beispielsweise einer Bohrung oder einer Nut, aufweisen, in der ebenfalls ein Teil des Positionierhilfsmittels 43 angeordnet ist.

Für die Befestigung des Abdeckelementes 44 auf dem Kernelement 7 kann das Positionierhilfsmittel 43 in einer ersten Stellung an dem Kernelement 7 angeordnet sein. In dieser ersten Stellung ragt das Positionierhilfsmittel 43 noch weiter aus der Ausnehmung 46 des Kernelementes 7 heraus, als dies in Fig. 1 dargestellt ist. Um diese Lage besser fixieren zu können kann an zumindest einer Oberfläche des Positionierhilfsmittels 43, die in Kontakt mit der Ausnehmung 46 ist, eine Rippung 48 oder eine Zahnung, etc. aufweisen. Das Positionierhilfsmittel 43 kann zusätzlich oder alternativ dazu auch geschlitzt ausgeführt sein, mit einem Durchmesser in diesem Bereich, der größer ist, als der entsprechende Durchmesser bzw. Querschnitt der Ausnehmung 46, sodass das Positionierhilfsmittel beim Einführen in die Ausnehmung 46 zusammengedrückt werden muss.

Dadurch, dass das Positionierhilfsmittel 43 in dieser ersten Stellung noch weiter aus der Ausnehmung 46 herausragt, wird vermieden, dass beim Aufschieben des Abdeckelementes 44 auf das Positionierhilfsmittel 43 bereits in Kontakt mit den Klebestreifen 45 bzw. der Verklebung kommt. Erst wenn der Druck auf das Abdeckelement 44 erhöht wird, wird das Positionierhilfsmittel in seine finale Stellung in die Ausnehmung 46 hineingeschoben, wodurch auch der Klebestreifen 45 in Kontakt mit dem Abdeckelement 44 kommt und damit letzteres am Kernelement 7 befestigt wird.

Selbstverständlich ist auch die umgekehrte Anordnung des Positionierhilfsmittels 43 möglich ist, dass dieses also zuerst in der Ausnehmung 47 des Abdeckelementes 44 und erst danach in der Ausnehmung 46 des Kernelements 7 angeordnet wird.

Es sei darauf hingewiesen, dass diese Anordnung bzw. Befestigung des Abdeckelementes 44 an dem Kernelement eine alternative Ausführung ist, die bei dem Fenster 1 oder der Tür zusätzlich zur Nut-Feder-Verbindung 11 vorhanden sein, kann, also beispielsweise am Flügelrahmen 3, wobei der Blendrahmen die Nut-Feder-Verbindung 11 aufweist, wie dies beispielsweise in Fig. 1 dargestellt ist. Es können aber auch beide, also der Flügelrahmen 3 und der Blendrahmen 4, die Nut-Feder-Verbindung 11 auf den Profilelementen 6 aufweisen können, wie dies voranstehend bereits ausgeführt wurde.

Weiter ist es möglich, dass ein bzw. die Profilelement(e) 6 beides aufweist/aufweisen, also sowohl die Nut-Feder-Verbindung 11 also auch das Positionierhilfsmittel 43.

Der Vollständigkeit halber sei erwähnt, dass das Glaselement 5 mit dem Kernelement des Flügelrahmens 3 oder mit dem Flügelrahmenprofil, falls der Flügelrahmen nicht durch voranstehend beschriebe Profilelemente 6 gebildet wird, verklebt ist und witterungsseitig teilweise von einer Glasleiste überdeckt ist. Zudem überdeckt auch das weitere Abdeckelement 27 das Glaselement 5 zur Ausbildung des Glaseinstandes teilweise. Raumseitig kann ein Abdeckelement 41 oder das Abdeckelement 8 zur Ausbildung des Glaseinstandes vorgesehen sein.

Es ist aber auch die Ausbildung eines so genannten Stufenglases möglich, bei dem - wie an sich bekannt - ein der Glasscheiben des Glaselementes, das bevorzugt als Mehrscheibenisolierglaselement ausgebildet ist, die restlichen Glasschieben seitlich überragt.

Es sei erwähnt, dass es prinzipiell möglich ist, dass das Abdeckelement 8 teilweise in den Putz eines Gebäudes integriert wird, wodurch die Austauschbarkeit nicht mehr so einfach durchgeführt werden kann, wie dies voranstehend ausgeführt ist. Trotzdem bietet das Profilelement 6 auch in diesem Fall noch Vorteile.

Die Ausführungsbeispiele zeigen mögliche Ausführungsvarianten des Profilelementes 6 bzw. des Fensters 1 oder der Tür, wobei an dieser Stelle bemerkt sei, dass auch diverse Kombinationen der einzelnen Ausführungsvarianten untereinander möglich sind.

Für die Anordnung des Abdeckelementes 8 auf dem Kernelement 7 wird dieses vorzugsweise mit einer Schwenkbewegung - entsprechend Pfeil 42 in Fig. 1 - auf das Kernelement aufgesetzt und dabei die zumindest eine Feder 12, 17 in die zumindest eine Nut 13, 18 eingeführt.

Der Ordnung halber sei abschließend darauf hingewiesen, dass zum besseren Verständnis des Aufbaus des Profilelementes 6 bzw. des Fensters 1 oder der Tür diese bzw. deren Bestandteile teilweise unmaßstäblich und/oder vergrößert und/oder verkleinert dargestellt wurden.

**Bezugszeichenaufstellung**

| | | | |
|---|---|---|---|
| 1 | Fenster | 31 | Steg |
| 2 | Blendrahmen | 32 | Bereich |
| 3 | Flügelrahmen | 33 | Folie |
| 4 | Blindrahmen | 34 | Deckschicht |
| 5 | Glaselement | 35 | Dichtelement |
| 6 | Profilelement | 36 | Fläche |
| 7 | Kernelement | 37 | Dichtelement |
| 8 | Abdeckelement | 38 | Verstärkungselement |
| 9 | Einzelschicht | 39 | Ausnehmung |
| 10 | Schichtdicke | 40 | Glasleiste |
| 11 | Nut-Feder-Verbindung | 41 | Abdeckelement |
| 12 | Feder | 42 | Pfeil |
| 13 | Nut | 43 | Positionierhilfsmittel |
| 14 | Querschnittserweiterung | 44 | Abdeckelement |
| 15 | Hinterschneidung. | 45 | Klebestreifen |
| 16 | Querschnittserweiterung | 46 | Ausnehmung |
| 17 | Feder | 47 | Ausnehmung |
| 18 | Nut | 48 | Rippung |
| 19 | Hinterschneidung | | |
| 20 | Abdeckelement | | |
| 21 | Ausnehmung | | |
| 22 | Steg | | |
| 23 | Abdeckelement | | |
| 24 | Wärmedämmelement | | |
| 25 | Schutzschale | | |
| 26 | Falz | | |
| 27 | Abdeckelement | | |
| 28 | Dichtelement | | |
| 29 | Nut | | |
| 30 | Kernelement | | |

## Patentansprüche

1. Profilelement (6) für ein Fenster (1) oder eine Tür umfassend ein Kernelement (7) und zumindest ein Abdeckelement (8), wobei das Abdeckelement (8) mit dem Kernelement (7) über zumindest eine Nut-Feder-Verbindung (11) lösbar verbunden ist, wobei eine Feder (12, 17) in einer Nut (13, 18) verriegelbar angeordnet ist, wozu die Nut (13, 18) eine Hinterschneidung (15, 19) aufweist, **dadurch gekennzeichnet, dass** die Feder (12, 17) der zumindest einen Nut-Feder-Verbindung (11) einen Querschnitt aufweist, der komplementär zum Querschnitt der Nut (13, 18) ist, sodass die Feder (12, 17) die Nut (13, 18) zur Gänze ausfüllt, und dass im Bereich neben der Nut-Feder-Verbindung (11) eine schlitzförmige Ausnehmung (21) neben der Nut (13) ausgebildet ist, wobei die Nut-Feder-Verbindung einen Steg (22) zwischen der schlitzförmigen Ausnehmung (21) und der Nut (13) aufweist.

2. Profilelement (6) nach Anspruch 1, **dadurch gekennzeichnet, dass** das Abdeckelement (8) werkzeuglos lösbar mit dem Kernelement (7) verbunden ist.

3. Profilelement (6) nach Anspruch 1 oder 2, **dadurch gekennzeichnet, dass** zur Verbindung des Abdeckelementes (8) mit dem Kernelement (7) sowohl im Abdeckelement (8) als auch im Kernelement (7) jeweils zumindest eine Nut (13 oder 18) ausgebildet ist, in die eine Feder (12 oder 17) des jeweils anderen Elementes eingreift.

4. Profilelement (6) nach einem der Ansprüche 1 bis 3, **dadurch gekennzeichnet, dass** Kernelement (7) mehrschichtig aus miteinander verbundenen Einzelschichten (9) ausgebildet ist.

5. Profilelement (6) nach einem der Ansprüche 1 bis 4, **dadurch gekennzeichnet, dass** am und/oder im Kernelement (7) ein aus Fasern hergestelltes Verstärkungselement (38) angeordnet ist.

6. Profilelement (6) nach Anspruch 5, **dadurch gekennzeichnet, dass** das Verstärkungselement (38) zumindest eine der Einzelschichten (9) des Kernelementes (7) bildet.

7. Profilelement (6) nach einem der Ansprüche 1 bis 6, **dadurch gekennzeichnet, dass** Beschläge ausschließlich im und/oder auf dem Kernelement (7), insbesondere im Falz (26), angeordnet sind.

8. Profilelement (6) nach einem der Ansprüche 1 bis 7, **dadurch gekennzeichnet, dass** am Kernelement (7) ein Wärmedämmelement (24) angeordnet ist, dessen Oberfläche zumindest teilweise foliert ist.

## Claims

1. A profile element (6) for a window (1) or a door comprising a core element (7) and at least one cover element (8), wherein the cover element (8) is separably connected to the core element (7) by means of at least one tongue-and-groove joint (11), and wherein a groove (13, 18) features an undercut (15, 19) in order to arrange a tongue (12, 17) in the groove (13, 18) in a lockable fashion, **characterized in that** the tongue (12, 17) of the at least one tongue-and-groove joint (11) has a cross section that is realized complementary to the cross section of the groove (13, 18) such that the tongue (12, 17) occupies the groove (13, 18) in its entirety, and **in that** the region adjacent to the tongue-and-groove joint (11) contains a slot-shaped recess (21) adjacent to the groove (13), wherein the tongue-and-groove joint features a web (22) between the slot-shaped recess (21) and the groove (13).

2. The profile element (6) according to claim 1, **characterized in that** the cover element (8) is separably connected to the core element (7) without tools.

3. The profile element (6) according to claim 1 or 2, **characterized in that** the cover element (8) and the core element (7) respectively feature at least one groove (13 or 18), into which a tongue (12 or 17) of the other element engages, in order to connect the cover element (8) to the core element (7).

4. The profile element (6) according to one of claims 1 to 3, **characterized in that** the core element (7) is realized in the form of a multilayer core element consisting of individual interconnected layers (9).

5. The profile element (6) according to one of claims 1 to 4, **characterized in that** a reinforcing element (38), which is made of fibers, is arranged on and/or in the core element (7).

6. The profile element (6) according to claim 5, **characterized in that** the reinforcing element (38) forms at least one of the individual layers (9) of the core element (7).

7. The profile element (6) according to one of claims 1 to 6, **characterized in that** fittings are exclusively arranged in and/or on the core element (7), particularly in the rabbet (26).

8. The profile element (6) according to one of claims 1 to 7, **characterized in that** a heat insulation element (24), the surface of which is at least partially covered with foil, is arranged on the core element (7).

## Revendications

1. Élément profilé (6) pour une fenêtre (1) ou une porte, comprenant un élément central (7) et au moins un élément de recouvrement (8), l'élément de recouvrement (8) étant relié de manière amovible avec l'élément central (7) par l'intermédiaire d'au moins une liaison par rainure et languette (11), une languette (12, 17) étant disposée de manière verrouillable dans une rainure (13, 18), la rainure (13, 18) comprenant pour cela une contre-dépouille (15, 19), **caractérisé en ce que** la languette (12, 17) de l'au moins une liaison à rainure et languette (11) présentant une section transversale qui est complémentaire de la section transversale de la rainure (13, 18), de façon à ce que la languette (12, 17) remplisse la rainure (13, 18) dans son intégralité, et **en ce que**, dans la zone proche de la liaison à rainure et languette (11), est réalisé un évidement (21) en forme de fente près de la rainure (13), la liaison à rainure et languette comprenant une nervure (22) entre l'évidement (21) en forme de fente et la rainure (13).

2. Élément profilé (6) selon la revendication 1, **caractérisé en ce que** l'élément de recouvrement (8) est relié de manière amovible sans outil avec l'élément central (7).

3. Élément profilé (6) selon la revendication 1 ou 2, **caractérisé en ce que**, pour la liaison de l'élément de recouvrement (8) avec l'élément central (7), aussi bien dans l'élément de recouvrement (8) que dans l'élément central (7), est réalisée au moins une rainure (13 ou 18) dans laquelle s'emboîte une languette (12 ou 17) de l'autre élément.

4. Élément profilé (6) selon l'une des revendications 1 à 3, **caractérisé en ce que** l'élément central (7) est conçu de manière multicouche avec plusieurs couches individuelles (9) reliées entre elles.

5. Élément profilé (6) selon l'une des revendications 1 à 4, **caractérisé en ce que** sur et/ou dans l'élément central (7) est disposé un élément de renfort (38) constitué de fibres.

6. Élément profilé (6) selon la revendication 5, **caractérisé en ce que** l'élément de renfort (38) constitue au moins une des couches individuelles (9) de l'élément central (7).

7. Élément profilé (6) selon l'une des revendications 1 à 6, **caractérisé en ce que** des garnitures sont disposées exclusivement dans et/ou sur l'élément central (7), plus particulièrement dans la feuillure (26).

8. Élément profilé (6) selon l'une des revendications 1 à 7, **caractérisé en ce que**, sur l'élément central (7) est disposé un élément d'isolation thermique (24), dont la surface est au moins partiellement laminée.
